# EUROPEAN PATENT APPLICATION

(11) **EP 4 299 164 A1**
(43) Date of publication of application: **03.01.2024**
(21) Application number: 22759577.4
(22) Date of filing: 21.02.2022
(51) Int. Cl.: B01D 61/00, B01D 61/02, B01D 61/14, B01D 63/02, C02F 1/44

(54) **CONCENTRATION DEVICE**

(30) Priority: 24.02.2021 CN 202110207619; 24.02.2021 CN 202120408482 U
(71) Applicant: TOYOBO MC Corporation, Osaka 530-0001 (JP)
(72) Inventor: KOHNO Daiki, Osaka-shi, Osaka 530-8230 (JP); ABE Yoji, Osaka-shi, Osaka 530-8230 (JP); NAKAO Takahito, Osaka-shi, Osaka 530-8230 (JP); GODA Shohei, Otsu-shi, Shiga 520-0292 (JP)
(74) Representative: Vossius & Partner Patentanwälte Rechtsanwälte mbB
(86) International application number: PCT/JP2022/006934
(87) International publication number: WO 2022/181541

(57) **Abstract**

A concentration device according to the present invention includes a membrane module having a first flow path and a second flow path that are separated by a semipermeable membrane, the membrane module including a U-shaped tube in which the semipermeable membrane is disposed, a first flow-path-inlet connection part and a first flow-path-outlet connection part, and a second flow-path-inlet connection part and a second flow-path-outlet connection part, the concentration device including an introducing unit for introducing a subject solution with a predetermined pressure into the first flow path from the first flow-path-inlet connection part, separating the subject solution into a concentrate and a permeate through the semipermeable membrane, passing the permeate through the second flow path, draining the concentrate from the first flow-path-outlet connection part, introducing the subject solution with a pressure lower than the predetermined pressure into the second flow path from the second flow-path-inlet connection part, and draining a diluent, which is diluted with the permeate, from the second flow-path-outlet connection part.

## Description

### TECHNICAL FIELD

The present invention relates to a concentration device that concentrates a subject solution that is a subject to be treated.

### BACKGROUND ART

A technique of concentrating a subject solution by passing a permeate (mainly water) from the subject solution through a semipermeable membrane is available (for example, PTL 1).

### CITATION LIST

### PATENT LITERATURE

PTL 1: WO 2018/136077

### SUMMARY OF INVENTION

### TECHNICAL PROBLEM

Devices that can be installed in a small space and efficiently concentrate a subject solution have been demanded in recent years.

### SOLUTION TO PROBLEM

In order to solve the problem, the inventors finally completed the present invention as a result of diligent studies. The present invention is configured as follows:
[1] A concentration device including a membrane module having a first flow path and a second flow path that are separated by a semipermeable membrane, wherein the membrane module includes a U-shaped tube in which the semipermeable membrane is disposed, a first flow-path-inlet connection part and a first flow-path-outlet connection part that are an inlet and an outlet of the first flow path respectively, and a second flow-path-inlet connection part and a second flow-path-outlet connection part that are an inlet and an outlet of the second flow path respectively, and the concentration device includes a liquid introducing means for introducing a subject solution with a predetermined pressure into the first flow path from the first flow-path-inlet connection part, separating the subject solution into a concentrate and a permeate through the semipermeable membrane, passing the permeate through the second flow path, draining the concentrate from the first flow-path-outlet connection part, introducing the subject solution with a pressure lower than the predetermined pressure into the second flow path from the second flow-path-inlet connection part, and draining a diluent, which is diluted with the permeate, from the second flow-path-outlet connection part.
[2] The concentration device according to [1], wherein the semipermeable membrane is a hollow-fiber membrane, the hollow-fiber membrane being charged in a U-shape into the U-shape tube, the U-shaped tube has hollow-fiber membrane support parts on both ends of the U-shaped tube, the hollow-fiber membrane being fixed with opened hollow-fiber ends to the U-shaped tube in a fluid-tight state by the hollow-fiber membrane support parts, the first flow-path-inlet connection part and the first flow-path-outlet connection part are configured to communicate with an external passage of the hollow-fiber membrane that is the first flow path, and the second flow-path-inlet connection part and the second flow-path-outlet connection part are configured to communicate with an internal passage of the hollow-fiber membrane that is the second flow path.
[3] The concentration device according to [2], wherein a contact surface between the U-shaped tube and the hollow-fiber membrane support part is subjected to roughening.
[4] The concentration device according to any one of [1] to [3], wherein the concentration device includes the plurality of membrane modules, the first flow-path-outlet connection part of the n-th membrane module and the first flow-path-inlet connection part of the n+1-th membrane module are connected to each other, and the second flow-path-outlet connection part of the n+1-th membrane module and the second flow-path-inlet connection part of the n-th membrane module are connected to each other.

### ADVANTAGEOUS EFFECTS OF INVENTION

A concentration device of the present invention configured as described above includes a membrane module having a U-shaped tube and thus can be installed in a small space and can efficiently concentrate a subject solution.

### BRIEF DESCRIPTION OF DRAWINGS

Fig. 1 illustrates an example of the appearance of a membrane module according to the present invention.
Fig. 2 illustrates an example of the cross section of the membrane module according to the present invention.
Fig. 3 illustrates another example of the membrane module according to the present invention.
Fig. 4 is an enlarged view illustrating an example of a hollow-fiber membrane support part in the membrane module according to the present invention.
Fig. 5 illustrates an example of a concentration device according to the present invention.
Fig. 6 illustrates another example of a concentration device according to the present invention.
Fig. 7 illustrates an example of a concentration device in which a plurality of membrane modules are connected according to the present invention.

### DESCRIPTION OF EMBODIMENTS

An embodiment of the present invention will be specifically described with reference to the accompanying drawings. In the following embodiment, the same or common parts in the drawings are indicated by the same reference numerals and a repetition of the description is omitted. In the case of a plurality of embodiments, it is assumed that the characterizing portions of the embodiments are properly combined unless otherwise specified.

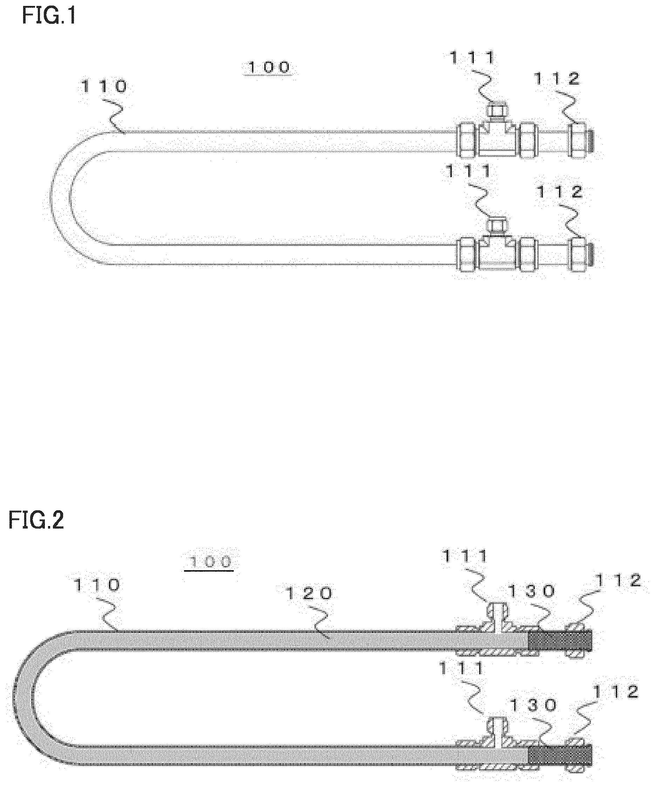

Fig. 1 illustrates an example of the appearance of a hollow-fiber membrane module 100 that is a membrane module of the present embodiment. Fig. 2 is a cross-sectional view illustrating an example of the interior of hollow-fiber membrane module 100. As illustrated in Figs. 1 and 2, hollow-fiber membrane module 100 includes a U-shaped tube 110 and a hollow-fiber membrane 120 that is a semipermeable membrane.

U-shaped tube 110 is a tube having a U-shaped structure, in which hollow-fiber membrane 120 is disposed. U-shaped tube 110 has a structure in which the tube is bent in a U shape. The bending radius, the tube diameter, the length, and the material or the like of the tube can be properly designed according to the installation space, durability, and the components and the throughput of a subject solution. Hollow-fiber membrane 120 may be a semipermeable membrane shaped like a hollow fiber, e.g., a reverse osmosis membrane, a forward osmosis membrane, or a nano-membrane filter. The pressure resistance, the pore size, the thickness, and the material of hollow-fiber membrane 120 may be properly selected according to the subject solution. Hollow-fiber membrane module 100 is divided into an external passage (first flow path) and an internal passage (second flow path) by hollow-fiber membrane 120.

Hollow-fiber membrane module 100 includes hollow-fiber membrane support parts 130. Hollow-fiber membrane support part 130 is disposed on each end of U-shaped tube 110. Both ends of hollow-fiber membrane 120 are fixed by hollow-fiber membrane support parts 130 such that a fluid-tight state is obtained in U-shaped tube 110 with opened hollow-fiber ends. The materials of hollow-fiber membrane support parts 130 can be formed of, but not limited to resin or the like. The material can be selected according to the subject solution or pressure resistance.

Peripheral-side connection parts (a first flow-path-inlet connection part and a first flow-path-outlet connection part) 111 are components mounted on U-shaped tube 110. Peripheral-side connection parts 111 are opened ports for introducing the subject solution so as to be into contact with the external passage of hollow-fiber membrane 120 from the outside of hollow-fiber membrane module 100 and draining the subject solution out of hollow-fiber membrane module 100. Hollow-fiber membrane module 100 includes at least two peripheral-side connection parts 111 that correspond to an inlet and an outlet for the subject solution and are configured to communicate with the external passage of hollow-fiber membrane 120. End connection parts (a second flow-path-inlet connection part and a second flow-path-outlet connection part) 112 are components mounted on U-shaped tube 110. End connection parts 112 are opened ports for introducing the subject solution so as to be into contact with the internal passage (second flow path) of hollow-fiber membrane 120 from the outside of hollow-fiber membrane module 100 and draining the subject solution out of hollow-fiber membrane module 100. Hollow-fiber membrane module 100 includes at least two end connection parts 112 that correspond to an inlet and an outlet for the subject solution and are configured to communicate with the internal passage of hollow-fiber membrane 120. Types of connection of peripheral-side connection parts 111 and end connection parts 112 include a tube-joint connection and a screw-in connection and may be selected as appropriate. Moreover, the materials of peripheral-side connection parts 111 and end connection parts 112 may be selected as appropriate.

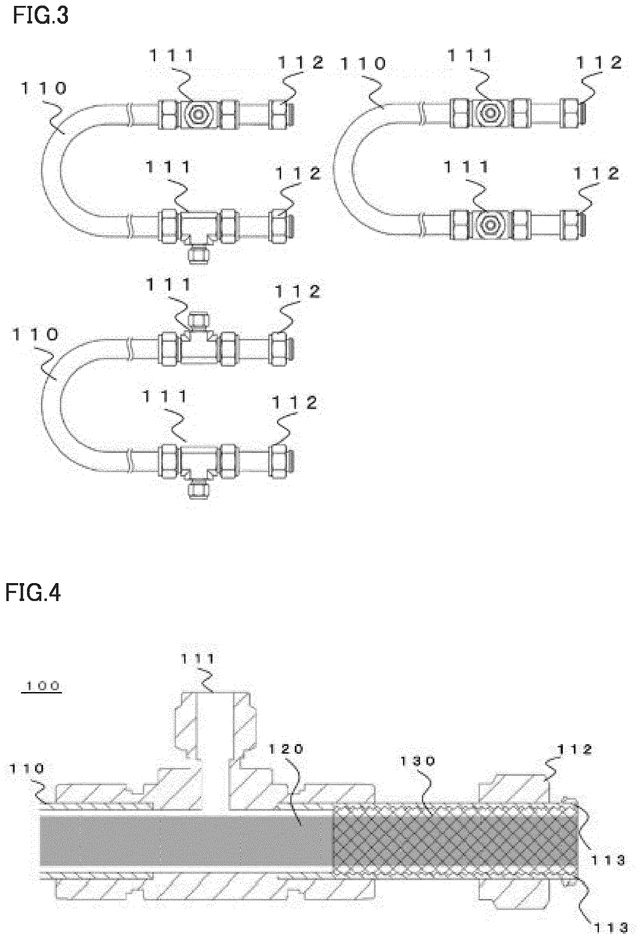

Fig. 3 illustrates three variations of hollow-fiber membrane module 100 according to the present embodiment. The peripheral-side connection parts 111 are opened in different directions from the structure of Fig. 1. Fig. 3 illustrates variation examples of the structure of hollow-fiber membrane module 100. Other structures may be used, and the orientations of the openings of peripheral-side connection parts 111 can be properly selected according to the installation space. The hollow-fiber membrane modules in Figs. 1 to 3 each include an inlet and an outlet that are provided as peripheral-side connection parts 111. Multiple inlets or outlets may be provided instead.

Fig. 4 illustrates an example of the interior of hollow-fiber membrane module 100 according to the present embodiment and an enlarged view of hollow-fiber membrane support part 130. Inside U-shaped tube 110, a roughened part 113 in which a contact surface with hollow-fiber membrane support part 130 is subjected to roughening is preferably provided. This is because roughening allows U-shaped tube 110 to catch hollow-fiber membrane support part 130 so as to improve contact therebetween and fluid tightness and suppress the removal of hollow-fiber membrane support part 130 during a high-pressure operation. In roughening, filing or threading can be used to increase a contact area or form grooves.

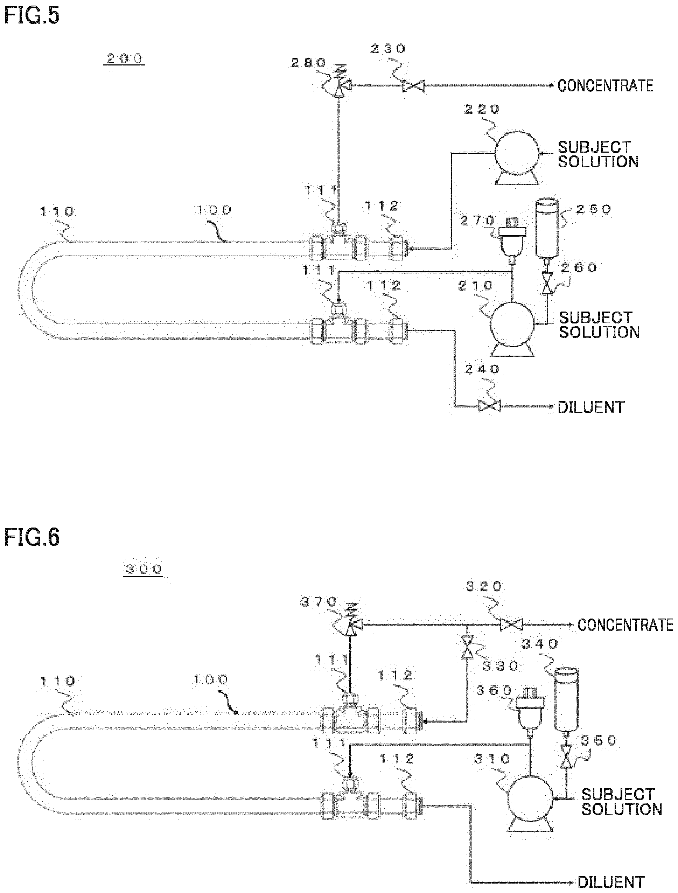

Fig. 5 illustrates an example of a concentration device 200 provided with hollow-fiber membrane module 100 according to the present embodiment. Concentration device 200 includes pumps 210 and 220. Concentration device 200 feeds the subject solution with a predetermined pressure into the external passage in hollow-fiber membrane module 100 by using pump 210 from the inlet side (lower peripheral-side connection part 111 in Fig. 5), which is one of peripheral-side connection parts 111, and drains the subject solution from the outlet side (upper peripheral-side connection part 111 in Fig. 5), which is the other of peripheral-side connection parts 111. Moreover, concentration device 200 feeds the subject solution with a pressure lower than the predetermined pressure into the internal passage in hollow-fiber membrane module 100 by using pump 220 from the inlet side (upper end connection part 112 in Fig. 5), which is one of end connection parts 112, and drains the subject solution from the outlet side (lower end connection part 112 in Fig. 5), which is the other of end connection parts 112. Further, concentration device 200 may include valves 230 and 240. Concentration device 200 adjusts pressures for introducing the subject solution into the external passage and the internal passage, by controlling the driving of pumps 210 and 220 and the openings of valves 230 and 240. In other words, in concentration device 200, pumps 210 and 220 and/or valves 230 and 240 act as a liquid introducing means for introducing the subject solution into hollow-fiber membrane module 100. The predetermined pressure can be set as appropriate.

As described above, the subject solution with the predetermined pressure is introduced into the external passage from peripheral-side connection part 111 on the inlet side, and the subject solution with a pressure lower than the predetermined pressure is introduced into the internal passage from end connection part 112 on the inlet side, so that the introduced solution is treated as follows: the subject solution introduced into the external passage is separated through hollow-fiber membrane 120 into a permeate that permeates through the membrane and a concentrate that does not permeate through the membrane. The concentrate is drained from peripheral-side connection part 111 on the outlet side. On the other hand, the separated permeate joins the subject solution introduced into the internal passage in hollow-fiber membrane module 100 from end connection part 112 on the inlet side, and then the permeate is drained as a diluent from the end connection part 112 on the outlet side. Thus, the concentrate drained from peripheral-side connection part 111 on the outlet side is concentrated more than the subject solution introduced from peripheral-side connection part 111 on the inlet side, and the diluent drained from end connection part 112 on the outlet side is diluted more than the subject solution introduced from end connection part 112 on the inlet side. The subject solution introduced from peripheral-side connection part 111 on the inlet side and the subject solution introduced from end connection part 112 on the inlet side may have different concentrations.

Furthermore, concentration device 200 may be provided with a priming pot 250 on the suction side of pump 210. Priming pot 250 is a device for removing air in pump 210 to suppress a reduction in the amount of discharge, the reduction being caused by trapped air. As illustrated in Fig. 5, priming pot 250 is disposed at a higher position than pump 210. Liquid from priming pot 250 is sucked into pump 210 before the subject solution is introduced into hollow-fiber membrane module 100, thereby removing air in pump 210. The flow paths of priming pot 250 and the subject solution are switched by a valve 260. Moreover, an accumulator 270 may be mounted on the discharge side of pump 210. Accumulator 270 is a device for feeding the subject solution to hollow-fiber membrane module 100 in an auxiliary manner while suppressing the pulsation of pump 210 and fluctuations in flow rate and pressure. Pump 220 may be provided with priming pot 250 and/or accumulator 270, which are not illustrated, when necessary.

Moreover, as illustrated in Fig. 5, valve 230 may be provided with a pressure controller 280. Pressure controller 280 is a pipe device for pressure control to a constant pressure. The provision of pressure controller 280 facilitates pressure control to a predetermined pressure as compared with an opening adjustment alone with valve 230, advantageously suppressing fluctuations in pressure. Pressure controller 280 can be a pressure relief valve (pack-pressure valve) that controls a pressure by the strength of an internal spring or an adjustment to spring insertion or an orifice that applies a back pressure according to a predetermined opening diameter. Pressure controller 280 may be provided upstream of valve 240, which is not illustrated. A concentrate drained from peripheral-side connection part 111 on the outlet side may be introduced into pump 210, and a diluent drained from end connection part 112 on the outlet side may be introduced into pump 220 to circulate the subject solution, which is not illustrated.

Fig. 6 illustrates an example of another concentration device 300 including hollow-fiber membrane module 100. Concentration device 300 includes a pump 310 and valves 320 and 330. Concentration device 300 feeds the subject solution with a predetermined pressure into the external passage in hollow-fiber membrane module 100 by using pump 310 from the inlet side (lower peripheral-side connection part 111 in Fig. 6), which is one of peripheral-side connection parts 111, and drains the subject solution from the outlet side (upper peripheral-side connection part 111 in Fig. 6), which is the other of peripheral-side connection parts 111. By using valves 320 and 330, a concentrate drained from peripheral-side connection part 111 on the outlet side is partially fed with a pressure lower than the predetermined pressure into the internal passage in hollow-fiber membrane module 100 from the inlet side (upper end connection part 112 in Fig. 6), which is one of end connection parts 112, and drains the concentrate from the outlet side (lower end connection part 112 in Fig. 6), which is the other of end connection parts 112. In concentration device 300, pump 310 and valves 320 and 330 act as a liquid introducing means for introducing the subject solution into hollow-fiber membrane module 100. The predetermined pressure can be set as appropriate.

Concentration device 300 drains the concentrate of the subject solution from peripheral-side connection part 111 on the outlet side and drains the diluent of the subject solution from end connection part 112 on the outlet side. The ratio of the amount of the collected concentrate and the amount of the concentrate introduced into end connection parts 112 on the inlet side is adjusted by valves 320 and 330.

Also in concentration device 300, a priming pot 340, an accumulator 360, and a pressure controller 370 may be provided as necessary. A concentrate drained from peripheral-side connection part 111 on the outlet side may be introduced into pump 310 to circulate the subject solution.

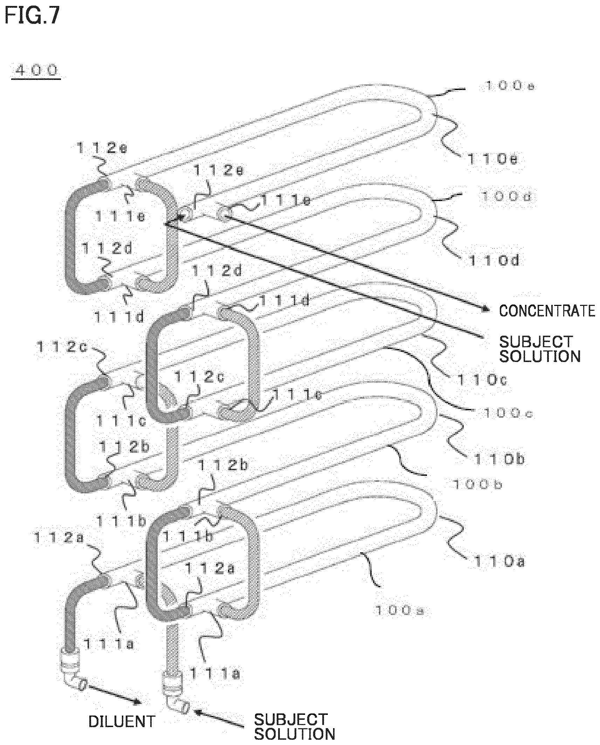

Fig. 7 illustrates an example of a concentration device 400 in which five hollow-fiber membrane modules 100 (100a, 100b, 100c, 100d, 100e) according to the present embodiment are connected to one another. Only the connected hollow-fiber membrane modules are illustrated. A peripheral-side connection part 111a on the outlet side of first hollow-fiber membrane module 100a is connected to a peripheral-side connection part 11 1b on the inlet side of second hollow-fiber membrane module 100b. An end connection part 112b on the outlet side of second hollow-fiber membrane module 100b is connected to an end connection part 112a on the inlet side of first hollow-fiber membrane module 100a.

In concentration device 400 illustrated in Fig. 7, five hollow-fiber membrane modules 100 are connected. However, the number of connected hollow-fiber membrane modules 100 is not limited. Moreover, hollow-fiber membrane modules 100 are vertically connected in Fig. 7. However, hollow-fiber membrane modules 100 may be horizontally connected or the vertical connection and the horizontal connection may be combined. Further, hollow-fiber membrane modules including peripheral-side connection parts 111 opened in different directions may be used in combination. The number and layout of connected hollow-fiber membrane modules 100 and the orientations of the openings of peripheral-side connection parts 111 for the used hollow-fiber membrane modules can be freely combined. Thus, concentration device 400 can be suitably set for an installation space. In Fig. 7, other configurations including the pumps and valves of concentration device 400 are disposed as in concentration device 200, but the layout of concentration device 300 may be used instead.

Furthermore, in concentration devices 200, 300, and 400, pipe devices such as a switching valve and a joint and measuring instruments such as a flowmeter, a pressure gauge, and a thermometer may be installed as appropriate. Operation conditions such as a pressure, a flow rate, and a temperature may be set according to the degree of concentration and throughput of the subject solution.

By adopting the hollow-fiber membrane modules and the concentration devices according to the present invention described above, the subject solution can be more efficiently concentrated than in a reverse osmosis membrane method (RO method). Moreover, because of the shape of U-shaped tube 110, the dimensions of the module in the longitudinal direction are about half those of a linear straight pipe, advantageously saving the space of the concentration device. Peripheral-side connection parts 111 and end connection parts 112 are opened as illustrated in Figs. 1 and 2, so that maintenance including the removal of connection pipes at peripheral-side connection parts 111 and end connection parts 112 is facilitated in the concentration device where hollow-fiber membrane modules 100 are connected as illustrated in Fig. 7.

It should be understood that the disclosed embodiments are merely exemplary and are not restrictive in all the aspects. The scope of the present invention is not indicated by the foregoing description but the claims. The scope of the present invention is intended to include meanings equivalent to the claims and all changes in the scope.

### REFERENCE SIGNS LIST

100: Hollow-fiber membrane module
110, 100a, 110b, 110d: U-shaped tube
111: Peripheral-side connection part (first flow-path-inlet connection part, first flow-path-outlet connection part)
112: End connection part (second flow-path-inlet connection part, second flow-path-outlet connection part)
113: Roughened part
120: Hollow-fiber membrane
130: Hollow-fiber membrane support part
200, 300, 400: Concentration device
210, 220, 310: Pump (introducing means)
230, 240, 320, 330: Valve (introducing means)
250, 340: Priming pot
260, 350: Valve
270, 360: Accumulator
280, 370: Pressure controller

## Claims

1. A concentration device comprising a membrane module having a first flow path and a second flow path that are separated by a semipermeable membrane,
wherein the membrane module includes a U-shaped tube in which the semipermeable membrane is disposed, a first flow-path-inlet connection part and a first flow-path-outlet connection part that are an inlet and an outlet of the first flow path respectively, and a second flow-path-inlet connection part and a second flow-path-outlet connection part that are an inlet and an outlet of the second flow path respectively, and
the concentration device includes a liquid introducing means for introducing a subject solution with a predetermined pressure into the first flow path from the first flow-path-inlet connection part, separating the subject solution into a concentrate and a permeate through the semipermeable membrane, passing the permeate through the second flow path, draining the concentrate from the first flow-path-outlet connection part, introducing the subject solution with a pressure lower than the predetermined pressure into the second flow path from the second flow-path-inlet connection part, and draining a diluent, which is diluted with the permeate, from the second flow-path-outlet connection part.

2. The concentration device according to claim 1, wherein the semipermeable membrane is a hollow-fiber membrane, the hollow-fiber membrane being charged in a U-shape into the U-shape tube,
the U-shaped tube has hollow-fiber membrane support parts on both ends of the U-shaped tube, the hollow-fiber membrane being fixed with opened hollow-fiber ends to the U-shaped tube in a fluid-tight state by the hollow-fiber membrane support parts,
the first flow-path-inlet connection part and the first flow-path-outlet connection part are configured to communicate with an external passage of the hollow-fiber membrane that is the first flow path, and
the second flow-path-inlet connection part and the second flow-path-outlet connection part are configured to communicate with an internal passage of the hollow-fiber membrane that is the second flow path.

3. The concentration device according to claim 2, wherein a contact surface between the U-shaped tube and the hollow-fiber membrane support part is subjected to roughening.

4. The concentration device according to any one of claims 1 to 3, wherein the concentration device comprises a plurality of membrane modules,
the first flow-path-outlet connection part of the n-th membrane module and the first flow-path-inlet connection part of the n+1-th membrane module are connected to each other, and
the second flow-path-outlet connection part of the n+1-th membrane module and the second flow-path-inlet connection part of the n-th membrane module are connected to each other.
